# EUROPÄISCHE PATENTSCHRIFT

(11) **EP 4 400 833 B1**
(45) Veröffentlichungstag und Bekanntmachung des Hinweises auf die Patenterteilung: **04.03.2026**
(21) Anmeldenummer: 23151188.2
(22) Anmeldetag: 11.01.2023
(51) Int. Cl.: G01N 21/896

(54) **VORRICHTUNG ZUM BESTIMMEN OPTISCHER EIGENSCHAFTEN EINES OPTISCH TRANSPARENTEN SUBSTRATS UND BESCHICHTUNGSANLAGE**
DEVICE FOR DETERMINING OPTICAL PROPERTIES OF AN OPTICALLY TRANSPARENT SUBSTRATE AND COATING SYSTEM
DISPOSITIF DE DÉTERMINATION DE PROPRIÉTÉS OPTIQUES D'UN SUBSTRAT OPTIQUEMENT TRANSPARENT ET INSTALLATION DE REVÊTEMENT

(43) Veröffentlichungstag der Anmeldung: 17.07.2024
(73) Patentinhaber: Bühler Alzenau GmbH, 63755 Alzenau (DE)
(72) Erfinder: SPERLING, Ralf, 04289 Leipzig (DE)
(74) Vertreter: Prinz & Partner mbB

(56) Entgegenhaltungen:
- EP-A1- 2 533 032
- DE-A1- 10 010 213
- DE-A1- 102013 101 269
- US-A1- 2012 044 344

## Beschreibung

Die Erfindung betrifft eine Vorrichtung zum Bestimmen optischer Eigenschaften eines optisch transparenten Substrats und eine Beschichtungsanlage zum Herstellen eines optisch transparenten Substrats.

In der Produktion von optisch transparenten Substraten, beispielsweise für Gebäudeverglasungen und Solarmodule, werden üblicherweise Beschichtungen auf das Substrat aufgebracht, um ein gewünschtes Eigenschaftsprofil des beschichteten Substrats zu erzeugen, beispielsweise im Hinblick auf Transmissionseigenschaften oder thermische Isolation. Von großer Bedeutung ist in diesem Zusammenhang, die Qualität und das tatsächlich erzielte optische Verhalten des beschichteten Substrats zuverlässig bestimmen zu können.

In diesem Zusammenhang sind Vorrichtungen bekannt, in welchen das beschichtete Substrat mittels einer Messeinheit untersucht wird, die dazu eingerichtet ist, elektromagnetische Strahlung in Richtung des Substrats zu emittieren. Dazu hat die Messeinheit eine Emissionseinheit, die senkrecht zur Oberfläche des Substrats ausgerichtet ist, sodass dieses mit elektromagnetischer Strahlung bestrahlt werden kann, die demnach senkrecht auf das Substrat trifft. Über Detektoreinheiten, die der Emissionseinheit zugeordnet sind, können die Transmission und die Reflexion der elektromagnetischen Strahlung gemessen und Rückschlüsse auf die Qualität des beschichteten Substrats gezogen werden.

Nachteilig an den bekannten Lösungen ist es unter anderem, dass diese die Transmission und die Reflexion am beschichteten Substrat nicht gleichzeitig messen können. Dies verlängert die notwendigen Messzeiten und ist insbesondere in Beschichtungsanlagen von Nachteil, in denen das Substrat entlang einer Bearbeitungsrichtung verfahren wird, und somit eine Messung am sich bewegenden Substrat durchgeführt werden muss. Durch die zeitlich versetzte Messung und das sich bewegende Substrat resultiert ein vergleichsweise großer untersuchter Messbereich, wodurch eine präzise Bestimmung der Eigenschaften des Substrats erschwert wird.

Die US 2012/0044344 A1 beschreibt ein System zum Detektieren von Defekten in einem transparenten Substrat, wobei das System ein Beleuchtungsmodul und ein Bildgebungsmodul aufweist. Das Beleuchtungsmodul weist eine erste Beleuchtungskomponente und eine zweite Beleuchtungskomponente auf, die einer Oberseite bzw. einer Unterseite des Substrates zugeordnet sind. Die erste Beleuchtungskomponente sendet mittels eines optischen Elements erzeugtes gebündeltes Licht aus, während die zweite Beleuchtungskomponente mittels eines optischen Diffusors gestreutes Licht emittiert.

Die EP2533032 beschreibt ein System zum Bestimmen optischer Eigenschaften eines optisch transparenten Substrats, das auf einer ersten Seite mit einer Substratbeschichtung versehen ist.

Die Aufgabe der Erfindung ist es, eine Vorrichtung bereitzustellen, mit der optische Eigenschaften eines optisch transparenten Substrats zuverlässig und präzise bestimmt werden können.

Die Aufgabe wird erfindungsgemäß gelöst durch eine Vorrichtung zum Bestimmen optischer Eigenschaften eines optisch transparenten Substrats, das auf einer Seite mit einer Substratbeschichtung versehen ist. Die Vorrichtung umfasst eine erste Messeinheit und eine zweite Messeinheit, wobei die erste Messeinheit der ersten Seite des Substrats und die zweite Messeinheit einer zweiten Seite des Substrats zugeordnet ist, die zur ersten Seite entgegengesetzt ist. Die erste Messeinheit umfasst eine erste Emissionseinheit zum Bestrahlen eines Messbereichs des Substrats mit gerichteter elektromagnetischer Strahlung sowie eine erste Detektoreinheit. Die zweite Messeinheit umfasst zumindest eine zweite Emissionseinheit zum Bestrahlen des Messbereichs des Substrats mit gerichteter elektromagnetischer Strahlung sowie zumindest eine zweite Detektoreinheit. Die Vorrichtung weist einen ersten Betriebsmodus und einen zweiten Betriebsmodus auf, wobei im ersten Betriebsmodus die erste Emissionseinheit aktiv und die zweite Emissionseinheit inaktiv ist und im zweiten Betriebsmodus die erste Emissionseinheit inaktiv und die zweite Emissionseinheit aktiv ist, sodass im ersten Betriebsmodus die von der Substratbeschichtung im Messbereich reflektierte elektromagnetische Strahlung in der ersten Detektoreinheit sowie die vom Substrat im Messbereich transmittierte elektromagnetische Strahlung in der zweiten Detektoreinheit detektierbar ist und im zweiten Betriebsmodus die vom Substrat im Messbereich transmittierte elektromagnetische Strahlung in der zweiten Detektoreinheit detektierbar ist.

Die Erfindung basiert auf dem Grundgedanken, den gleichen Messbereich zum Bestimmen verschiedener Parameter des beschichteten optisch transparenten Substrats zu verwenden, die Rückschlüsse auf die Qualität des Substrats inklusive der auf das Substrat aufgebrachten Substratbeschichtung zulassen. Dabei ist die erfindungsgemäße Vorrichtung derart ausgestaltet, dass im ersten Betriebsmodus zum gleichen Zeitpunkt die von der Substratbeschichtung hervorgerufene Reflexion, also die der ersten Seite des Substrats zugeordnete Reflexion, als auch die Transmission durch das Substrat messbar ist. Anders ausgedrückt wirkt die von der ersten Emissionseinheit ausgestrahlte elektromagnetische Strahlung nach Einwirkung auf das beschichtete Substrat sowohl mit der ersten Detektoreinheit, die der ersten Seite des Substrats zugeordnet ist, als auch der zweiten Detektoreinheit zusammen, die der zweiten Seite des Substrats zugeordnet ist. Auf diese Weise kann die Messdauer reduziert und die Größe des Messbereichs minimiert werden, unabhängig davon, ob das Substrat während der Messung in seiner Lage verharrt oder verfahren wird.

Zugleich sind verschiedene Emissionseinheiten vorgesehen, die dazu einsetzbar sind, im gleichen Messbereich verschiedene optische Eigenschaften des beschichteten Substrats zu bestimmen, wobei die jeweiligen Messbedingungen von auf der ersten Seite und/oder auf der zweiten Seite des Substrats aufgebrachten Beschichtungen beeinflusst sind.

Es versteht sich, dass die Substratbeschichtung auf der ersten Seite auch nur teilweise die erste Seite bedecken kann. Zudem kann die zweite Seite ebenfalls mit einer Substratbeschichtung versehen sein, wobei die Substratbeschichtungen, die der ersten Seite und der zweiten Seite zugeordnet sind, sowohl gleich als auch unterschiedlich sein können. Die Substratbeschichtung kann ferner eine oder mehrere Beschichtungslagen umfassen. Entscheidend ist lediglich, dass die auf das optisch transparente Substrat aufgebrachten Beschichtungen zu einem weiterhin optisch transparenten beschichteten Substrat führen.

Erfindungsgemäß senden die erste Emissionseinheit und die zweite Emissionseinheit gerichtete elektromagnetische Strahlung aus. Der Begriff "gerichtete elektromagnetische Strahlung" bedeutet in diesem Zusammenhang, dass die elektromagnetische Strahlung frei von Streulichtanteilen ist, abgesehen von unvermeidbaren Streulichtanteilen aus der Umgebung des Messbereichs. Dies erlaubt es, etwaige Fehlerquellen in den mittels der Detektoreinheiten erhaltenen Messdaten zu minimieren und somit die Qualität in der Bestimmung der optischen Eigenschaften des Substrats zu optimieren.

Die erste Emissionseinheit und/oder die zweite Emissionseinheit können bzw. kann derart zur ersten Seite bzw. zur zweiten Seite des Substrats angeordnet sein, dass die abgegebene elektromagnetische Strahlung einen ersten bzw. zweiten Emissionswinkel im Bereich von 3 bis 10° relativ zur Normalen der ersten Seite bzw. der zweiten Seite des Substrats hat, beispielsweise einen ersten bzw. zweiten Emissionswinkel von 8°. Anders ausgedrückt wird in dieser Ausgestaltung ein gewisser Winkelversatz der entsprechenden Emissionseinheit zur Oberfläche des beschichteten Substrats gewählt, der eine gleichzeitige Messung von Reflexion und Transmission ermöglicht und zudem sicherstellt, dass die beiden Messungen in demselben Messbereich erfolgen.

Die Winkeltoleranz des ersten bzw. zweiten Emissionswinkels kann über ein Toleranzfeld definiert sein, das in Abhängigkeit der Substratdicke sowie des Brechungsindexes des Substrats festgelegt ist. Beispielsweise beträgt die Winkeltoleranz ±1,5° bei einer Substratdicke von höchstens 30 mm und einem Brechungsindex des Substrats von bis zu 1,6.

Bevorzugt sind die erste Emissionseinheit, die zweite Emissionseinheit, die erste Detektoreinheit und die zweite Detektoreinheit derart zueinander angeordnet, dass sich eine von der ersten Emissionseinheit in Richtung zur zweiten Detektoreinheit erstreckende erste Verbindungslinie mit einer zweiten Verbindungslinie im Messbereich des Substrats schneidet, die sich von der zweiten Emissionseinheit in Richtung zur ersten Detektoreinheit erstreckt.

Die erste Verbindungslinie und die zweite Verbindungslinie entsprechen somit im Wesentlichen dem Transmissionsstrahlengang der von der jeweiligen Emissionseinheit ausgesandten gerichteten elektromagnetische Strahlung.

Ein aufgrund von Brechungseffekten im Substrat hervorgerufener Parallelversatz des Transmissionsstrahlengangs bleibt in Bezug auf die erste bzw. zweite Verbindungslinie unberücksichtigt, da diese durch die Anordnung der ersten Detektoreinheit bzw. der zweiten Detektoreinheit innerhalb der jeweiligen Messeinheiten ausgleichbar ist und somit toleriert werden kann.

Die erste Detektoreinheit und/oder die zweite Detektoreinheit kann bzw. können ein VIS-Spektrometer und/oder ein NIR-Spektrometer umfassen. Somit kann die jeweilige Detektoreinheit dazu eingerichtet sein, elektromagnetische Strahlung im sichtbaren Bereich des Lichtspektrums sowie des nahen Infrarotbereichs zu detektieren. In diesen Wellenlängenbereichen ist es von besonderer Bedeutung, die Eigenschaften des optisch transparenten Substrats zu ermitteln, um deren Eignung für den angedachten Einsatzzweck zu überprüfen. Die Detektion mittels eines VIS-Spektrometers erlaubt beispielsweise die Bestimmung des optischen Erscheinungsbilds, das das beschichtete Substrat im menschlichen Auge hervorruft, beispielsweise die Bestimmung eines Farbeindrucks. Über ein NIR-Spektrometer können Informationen zum thermischen Verhalten des beschichteten Substrats gewonnen werden.

Um die Messgeschwindigkeit der Vorrichtung weiter zu erhöhen, kann der ersten Emissionseinheit und/oder der zweiten Emissionseinheit ein Schaltelement zugeordnet sein, mittels dem eine Quelle für elektromagnetische Strahlung zuschaltbar ist, um die erste Emissionseinheit oder die zweite Emissionseinheit aktiv zu schalten. Insbesondere kann das Schaltelement in der entsprechenden Emissionseinheit integriert sein. Durch diese Ausgestaltung muss die Quelle für elektromagnetische Strahlung selbst nicht eingeschaltet bzw. ausgeschaltet werden, wenn die Vorrichtung vom ersten Betriebsmodus in den zweiten Betriebsmodus wechselt. Stattdessen ist der Zeitversatz, der beim Wechsel der Betriebsmodi der Vorrichtung eingehalten werden muss, lediglich über die Schaltzeit des eingesetzten Schaltelements wählbar.

Bevorzugt weist das Schaltelement eine Schaltzeit von 30 ms oder weniger auf, insbesondere von 10 ms oder weniger. Schaltelemente, die eine entsprechende Schaltzeit aufweisen, sind bekannt. Beispielsweise kann das Schaltelement ein Fiberswitch sein.

Der Messbereich kann eine Länge von 30 mm oder weniger aufweisen, insbesondere von 20 mm oder weniger, beispielsweise von 12 mm oder weniger. Auf diese Weise ist eine besonders präzise Bestimmung der optischen Eigenschaften des Substrats möglich, da die in den Messungen erhaltenen Messdaten für einen vergleichsweise kleinen Bereich des Substrats repräsentativ sind, wodurch Fehler durch gemittelte Messdaten minimiert oder ausgeschlossen werden können. Ein Messbereich derartiger Längen ist durch die erfindungsgemäße Ausgestaltung und Abstimmung zwischen erster Emissionseinheit, erster Detektoreinheit, zweiter Emissionseinheit und zweiter Detektoreinheit realisierbar.

Die geometrische Gestalt des Messbereichs auf der Oberfläche des Substrats, also dessen Querschnitt, ist nicht weiter eingeschränkt. Beispielsweise kann der Messbereich kreisförmig, oval, quadratisch oder rechteckig sein. In jedem Fall bezeichnet die Länge des Messbereichs jeweils die Ausdehnung des Messbereichs entlang der Richtung, in der der Messbereich am größten ist.

In einer Variante hat die erste Messeinheit und/oder die zweite Messeinheit eine dritte Emissionseinheit zum Bestrahlen des Messbereichs des Substrats mit gerichteter elektromagnetischer Strahlung sowie eine der dritten Emissionseinheit zugeordnete dritte Detektoreinheit. Die dritte Emissionseinheit ist derart zur ersten Seite bzw. zur zweiten Seite des Substrats angeordnet, dass die abgegebene elektromagnetische Strahlung einen dritten Emissionswinkel relativ zur Normalen der ersten Seite bzw. der zweiten Seite des Substrats hat.

Der dritte Emissionswinkel kann flexibel gewählt sein, je nachdem, welche Eigenschaft des beschichteten Substrats anhand der in der dritten Detektoreinheit erhaltenen Messdaten bestimmt werden soll.

Der dritte Emissionswinkel liegt insbesondere im Bereich von 45 bis 65°.

Die optischen Eigenschaften eines beschichteten Substrats können sich in Abhängigkeit des Betrachtungswinkels auf das Substrat erheblich unterscheiden. Die dritte Emissionseinheit ermöglicht es, zuverlässig das Erscheinungsbild des Substrats auch in einem vergleichsweise steilen Winkel relativ zur jeweiligen Oberfläche des Substrats zu bestimmen. Auf diese Weise kann insbesondere die Farbe des optischen Substrats an der ersten Seite bzw. der zweiten Seite bestimmt werden.

Zudem kann auf diese Weise überprüft werden, dass das beschichtete Substrate keine sogenannten "Flip/Flop"-Effekte aufweist. Darunter wird verstanden, dass sich der optische Eindruck, den das beschichtete Substrat bei einem Betrachter hervorruft, insbesondere der Farbeindruck, bei einer vergleichsweise geringen Änderung des Betrachtungswinkels erheblich bzw. sprunghaft verändert.

Es versteht sich, dass die dritte Emissionseinheit sowohl lediglich der ersten Seite zugeordnet sein kann, insbesondere Bestandteil der ersten Messeinheit ist, als auch lediglich der zweiten Seite zugeordnet sein kann, insbesondere Bestandteil der zweiten Messeinheit ist. Auch kann sowohl in die erste Messeinheit als auch in die zweite Messeinheit eine dritte Emissionseinheit integriert sein.

Um eine je nach Anwendungsfall optimale Messung zu ermöglichen, kann die dritte Emissionseinheit stufenweise oder stufenlos verstellbar sein. Auf diese Weise kann über die dritte Emissionseinheit der Farbeindruck bei unterschiedlichen Betrachtungswinkeln ermittelt werden.

Der Zeitpunkt, an dem die dritte Emissionseinheit aktiv ist, kann flexibel gewählt werden. Beispielsweise kann die dritte Emissionseinheit im ersten und/oder zweiten Betriebsmodus aktiv sein. Dadurch, dass der dritte Emissionswinkel (stark) vom ersten Emissionswinkel und vom zweiten Emissionswinkel abweicht, beispielsweise um mehr als 40°, wird die von der ersten bzw. der zweiten Emissionseinheit und der dritten Emissionseinheit ausgesandte elektromagnetische Strahlung nicht oder nur unerheblich beeinflusst.

Die elektromagnetische Strahlung weist insbesondere eine Wellenlänge im Bereich von 350 bis 2500 nm auf, beispielsweise von 350 bis 1600 nm, vorzugsweise von 350 bis 1200 nm und weiter bevorzugt von 380 bis 1000 nm. Bei Wellenlängen unterhalb von 350 nm würden bereits UV-Eigenschaften des beschichteten Substrats vermessen, die für den Eindruck keine Rolle spielen, den das beschichte Substrat bei der Betrachtung des optischen Substrats mit dem menschlichen Auge hervorruft. Wellenlängen mit einer Wellenlänge von über 2500 nm sind technisch schwer darstellbar. Zudem können sich bei Messungen mit Wellenlängen von über 2500 nm größere Fehlerbereiche aufgrund von Einflüssen der Umgebungswärme ergeben.

Ferner kann wenigstens ein Messkopf vorgesehen sein, der die erste Messeinheit und/oder die zweite Messeinheit aufweist, wobei der Messkopf entlang des Substrats beweglich ist.

Auf diese Weise kann die Messung der optischen Eigenschaften des beschichteten Substrats an verschiedenen Stellen des beschichteten Substrats durchgeführt werden. Zudem kann der Messkopf dem Substrat folgen, falls dieses innerhalb der Vorrichtung verfahren wird, sodass auch in diesem Fall ein möglichst kleiner Messbereich erzielt wird.

Die Vorrichtung kann über eine Transporteinrichtung verfügen, mit der das Substrat entlang einer Verarbeitungsrichtung verfahrbar ist, insbesondere wobei das Substrat entlang der Verarbeitungsrichtung mit einer Geschwindigkeit von mehreren Metern pro Minute verfahrbar ist. Beispielsweise liegt die Geschwindigkeit, mit der das Substrat entlang der Verarbeitungsrichtung verfahrbar ist, im Bereich von 9 bis 25 m/min. Auf diese Weise lässt sich der Durchsatz an untersuchten beschichteten Substraten der erfindungsgemäßen Vorrichtung erhöhen und die Handhabung des beschichteten Substrats innerhalb der Vorrichtung erleichtern.

Bevorzugt wird die Transporteinrichtung mit dem zuvor beschriebenen beweglichen Messkopf kombiniert, wobei die Bewegung des Messkopfs mit der Bewegung des Substrats koordiniert ist.

Der Messkopf weist insbesondere eine Verfahrgeschwindigkeit auf, die gleich oder höher der Geschwindigkeit ist, mit der das Substrat entlang der Verarbeitungsrichtung verfahren wird. Beispielsweise beträgt die Geschwindigkeit des Messkopfs bis zu 800 mm/s, bevorzugt bis zu 600 mm/s. Es versteht sich jedoch, dass die Verfahrgeschwindigkeit des Messkopfs lediglich an das jeweils durchgeführte Messverfahren angepasst sein muss.

Bevorzugt ist die Vorrichtung dazu eingerichtet, die optischen Eigenschaften des Substrats in mehreren Messbereichen zu ermitteln, wobei für jeden der Messbereiche zumindest eine Messung im ersten Betriebsmodus der Vorrichtung und eine Messung im zweiten Betriebsmodus der Vorrichtung durchgeführt wird. Anders ausgedrückt ist die Vorrichtung dazu eingerichtet, das beschichtete Substrat abzurastern. Auf diese Weise können Eigenschaftsprofile des beschichteten Substrats über dessen Ausdehnung ermittelt werden, aus denen bestimmbar ist, wie gleichförmig bzw. einheitlich das beschichtete Substrat über die verschiedenen Messbereiche hinweg ist.

Zusätzlich kann die Vorrichtung eine Einheit zur Durchführung einer Messung eines Flächenwiderstands des Substrats aufweisen, insbesondere zum Durchführen einer Wirbelstrommessung im Messbereich des Substrats. Über den Flächenwiderstand können die Eigenschaften des Substrats über eine komplementäre Methode zur Bestimmung der optischen Eigenschaften untersucht werden, um weitere Parameter des beschichteten Substrats zu ermitteln und/oder die mittels der Detektoreinheiten erhaltenen Informationen zu überprüfen. Beispielsweise können mittels der Wirbelstrommessung Rückschlüsse auf die Kristallstruktur des Substrats und/oder der Substratbeschichtung gezogen werden.

Die Aufgabe der Erfindung wird ferner gelöst durch eine Beschichtungsanlage zum Herstellen eines optisch transparenten Substrats mit einer auf einer ersten Seite des Substrats aufgebrachten Substratbeschichtung, die eine Vorrichtung zum Bestimmen optischer Eigenschaften des optisch transparenten Substrats wie zuvor beschrieben umfasst.

Die Eigenschaften und Merkmale der erfindungsgemäßen Vorrichtung gelten entsprechend für die erfindungsgemäße Beschichtungsanlage und umgekehrt, und es wird auf die obigen Erläuterungen verwiesen.

Die Vorrichtung zum Bestimmen optischer Eigenschaften kann sich unmittelbar an ein Beschichtungsmodul der Beschichtungsanlage anschließen oder räumlich von dieser getrennt sein.

In einer Variante ist die Vorrichtung zum Bestimmen optischer Eigenschaften derart in die Beschichtungsanlage integriert, dass die Messung der optischen Eigenschaften des optisch transparenten Substrats bereits während des Beschichtungsvorgangs untersucht wird. Beispielsweise wird der Messbereich in einem Teil des Substrats gewählt, der bereits beschichtet worden ist, während stromaufwärts entlang einer Bearbeitungsrichtung der Beschichtungsanlage ein weiterer Teil des Substrats beschichtet wird. In dieser Variante ist es möglich, den Beschichtungsvorgang auf Basis der bestimmten optischen Eigenschaften anzupassen.

In einer alternativen und bevorzugten Variante ist die Vorrichtung zum Bestimmen optischer Eigenschaften ein separates Anlagenmodul der Beschichtungsanlage, um die Vorrichtung zum Bestimmen optischer Eigenschaften nicht durch weitere Module der Beschichtungsanlage zu beeinflussen. Anders ausgedrückt dient die erfindungsgemäße Vorrichtung insbesondere als "ex-situ"-Messvorrichtung. Zudem erlaubt es eine solche Ausgestaltung, die Herstellung des beschichteten Substrats zeitlich und/oder räumlich vom Bestimmen der optischen Eigenschaften des beschichteten Substrats zu trennen, wodurch die Flexibilität im Herstellungsverfahren des beschichteten Substrats erhöht ist.

Weitere Merkmale und Eigenschaften der Erfindung ergeben sich aus der nachfolgenden Beschreibung beispielhafter Ausführungsformen, die nicht in einem einschränkenden Sinn verstanden werden sollen, sowie aus den Zeichnungen, auf die Bezug genommen wird. In diesen zeigen:
- Fig. 1 eine erfindungsgemäße Beschichtungsanlage,
- Fig. 2 eine erfindungsgemäße Vorrichtung zum Bestimmen optischer Eigenschaften, wie sie in der Beschichtungsanlage nach Fig. 1 zum Einsatz kommt,
- Fig. 3 die Vorrichtung aus Fig. 2 in einem ersten Betriebsmodus, und
- Fig. 4 die Vorrichtung aus Fig. 2 in einem zweiten Betriebsmodus, und
- Fig. 5 eine weitere Ausführungsform der erfindungsgemäßen Vorrichtung analog zu Fig. 2.

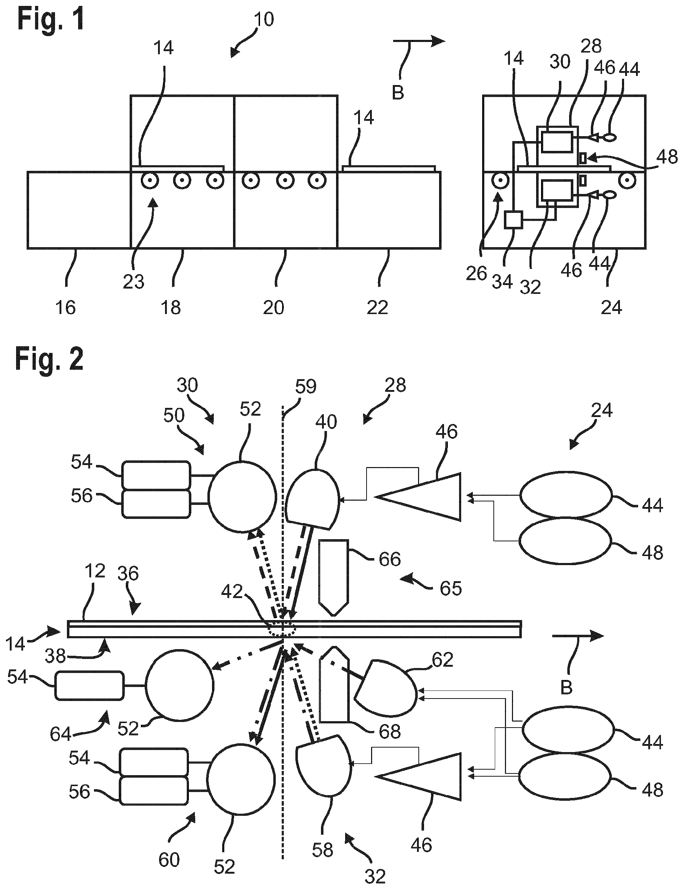

Fig. 1 zeigt schematisch eine Beschichtungsanlage 10 zum Aufbringen einer Substratbeschichtung 12 auf ein optisch transparentes Substrat 14 (vgl. Fig. 2).

Das Substrat 14 ist beispielsweise aus Glas oder einem Kunststoff und ist im Wesentlichen plan. Beispielsweise handelt es sich bei dem Substrat 14 um eine Platte mit einem rechteckigen Querschnitt und Außenmaße von bis zu 4 x 9 Metern. Grundlegend ist die Art und Form des Substrats 14 jedoch nicht weiter eingeschränkt, solange dieses optisch transparent ist und von der Beschichtungsanlage 10 gehandhabt werden kann.

Im Folgenden wird das mit der Substratbeschichtung 12 versehene Substrat 14 auch als "beschichtetes Substrat 14" bezeichnet.

Die Beschichtungsanlage 10 verfügt über ein Beladungsmodul 16, ein Beschichtungsmodul 18, ein Waschmodul 20 und ein Entlademodul 22, die entlang einer Bearbeitungsrichtung B aufeinander folgend angeordnet sind.

Das Beladungsmodul 16 dient dazu, das Substrat 14 auf eine Rollenanordnung 23 der Beschichtungsanlage 10 zu laden, mit der das Substrat 14 entlang der Bearbeitungsrichtung B verfahren werden kann.

Im Beschichtungsmodul 18 wird die Substratbeschichtung 12 auf das Substrat 14 aufgebracht. Die Art der Substratbeschichtung 12 ist nicht weiter eingeschränkt, solange auch das beschichtete Substrat 14 optisch transparent ist. Beispielsweise ist die Substratbeschichtung 12 eine Antireflexionsbeschichtung, eine Thermobeschichtung und/oder eine Schutzbeschichtung.

Im Waschmodul 20 werden etwaige Überreste des Beschichtungsprozesses im Beschichtungsmodul 18 entfernt.

Das beschichtete Substrat 14 kann im Entlademodul 22 entnommen werden, beispielsweise mittels eines (nicht dargestellten) Entnahmemechanismus.

Die Anzahl und Art der Module der in Fig. 1 gezeigten Beschichtungsanlage 10 ist lediglich beispielhaft, sodass selbstredend auch weitere und/oder andere Module in der Beschichtungsanlage 10 vorhanden sein können.

Ferner verfügt die Beschichtungsanlage 10 über eine Vorrichtung 24 zum Bestimmen optischer Eigenschaften des optisch transparenten Substrats 14.

Wie in Fig. 1 schematisch dargestellt, ist die Vorrichtung 24 separat zu den übrigen Modulen der Beschichtungsanlage 10 angeordnet, sodass die Vorrichtung 24 unabhängig von diesen betrieben werden kann. Selbstredend kann die Vorrichtung 24 auch in die Abfolge der übrigen Module der Beschichtungsanlage 10 entlang der Bearbeitungsrichtung B integriert sein. Beispielsweise kann die Vorrichtung 24 zwischen dem Waschmodul 20 und dem Entlademodul 22 angeordnet sein.

Die Vorrichtung 24 verfügt über eine Transporteinrichtung 26, mit der das Substrat 14 entlang der Bearbeitungsrichtung B durch die Vorrichtung 24 bewegt werden kann, beispielsweise mit einer Geschwindigkeit von 5 m/min oder weniger.

Zudem verfügt die Vorrichtung 24 über einen Messkopf 28, der eine erste Messeinheit 30 sowie eine zweite Messeinheit 32 umfasst.

Der Messkopf 28 ist mit einem Steuermodul 34 signalübertragend verbunden, sodass die Komponenten des Messkopfs 28 mittels des Steuermoduls 34 kontrolliert und vom Messkopf 28 erhobene Messdaten an das Steuermodul 34 übermittelt und von diesem ausgewertet werden können.

Das Steuermodul 34 ist zudem dazu eingerichtet, die weiteren Komponenten der Vorrichtung 24 zu steuern.

In Fig. 2 sind ausgewählte Komponenten der Vorrichtung 24 und deren Anordnung relativ zum beschichteten Substrat 14 näher dargestellt.

Wie in Fig. 2 zu erkennen, bedeckt die Substratbeschichtung 12 in der gezeigten Ausführungsform eine erste Seite 36 des Substrats 14 vollständig, während sich auf einer zur ersten Seite 36 entgegengesetzten zweiten Seite 38 des Substrats 14 keine Substratbeschichtung befindet.

Selbstredend kann das Substrat 14 auch abweichend von der in Fig. 2 gezeigten Ausführungsform beschichtet sein. Beispielsweise kann die Substratbeschichtung 12 auch lediglich in Teilbereichen der ersten Seite 36 des Substrats 14 aufgebracht sein. Zudem kann die Substratbeschichtung 12 auch mehrere Teillagen umfassen. Ferner kann sowohl auf der ersten Seite 36 als auch auf der zweiten Seite 38 des Substrats 14 eine Substratbeschichtung 12 vorhanden sein.

Die erste Messeinheit 30 verfügt über eine erste Emissionseinheit 40, die dazu eingerichtet ist, gerichtete elektromagnetische Strahlung auf einen Messbereich 42 des Substrats 14 zu emittieren.

Dazu ist die erste Emissionseinheit 40 mit einer ersten Quelle 44 für elektromagnetische Strahlung verbunden, wobei zwischen der ersten Quelle 44 und der ersten Emissionseinheit 40 ein Schaltelement 46 angeordnet ist, mittels dem die erste Quelle 44 zuschaltbar ist. Anders ausgedrückt ist über das Schaltelement 46 bestimmbar, ob elektromagnetische Strahlung von der Quelle 44 zur ersten Emissionseinheit 40 gelangt und somit ob die erste Emissionseinheit 40 aktiv ist oder nicht. Die Schaltzeit der ersten Emissionseinheit 40 ist somit über die Schaltzeit des Schaltelements 46 festgelegt.

Das Schaltelement 46 ist bevorzugt ein Fiberswitch, um ein besonders schnelles Umschalten zu ermöglichen und weist insbesondere eine Schaltzeit von 30 ms oder weniger auf.

Ferner ist eine zweite Quelle 48 für elektromagnetische Strahlung vorhanden, die ebenfalls über das Schaltelement 46 zuschaltbar ist.

Die erste Quelle 44 und die zweite Quelle 48 stellen bevorzugt elektromagnetische Strahlung unterschiedlicher Wellenlängen bzw. Wellenlängenbereiche zur Verfügung, sodass über die erste Emissionseinheit 40 gerichtete elektromagnetische Strahlung unterschiedlicher Wellenlängen emittierbar ist, je nachdem, ob die erste Quelle 44 und/oder die zweite Quelle 48 über das Schaltelement 46 zugeschaltet ist.

Beispielsweise stellt die erste Quelle 44 für elektromagnetische Strahlung mit einer Wellenlänge im sichtbaren Bereich des Lichtspektrums zur Verfügung und die zweite Quelle 48 elektromagnetische Strahlung mit einer Wellenlänge im nahen Infrarotbereich des Lichtspektrums.

Die Quellen 44 und 48 sind beispielsweise LEDs und/oder Halogenlampen.

Grundsätzlich kann statt mehrerer Quellen 44 und 48 auch lediglich eine einzelne Quelle für elektromagnetische Strahlung vorhanden sein, wenn diese allein elektromagnetische Strahlung des gewünschten Wellenlängenbereichs zur Verfügung stellen kann.

Es versteht sich, dass das Schaltelement 46 auf die jeweils eingesetzte Art und Anzahl der Quellen 44 und 48 abgestimmt ist. Demnach kann das Schaltelement 46 ein oder mehrere Anschlussstellen für die Quellen 44 und 48 und ein oder mehrere Ausgänge aufweisen, der bzw. die mit der jeweils zugeordneten Emissionseinheit verbunden sind. In der in den Fig. 2 bis 4 dargestellten Ausführungsform ist eine Variante gezeigt, in der die Schaltelemente 46 jeweils mehrere Anschlussstellen und einen einzelnen Ausgang aufweisen.

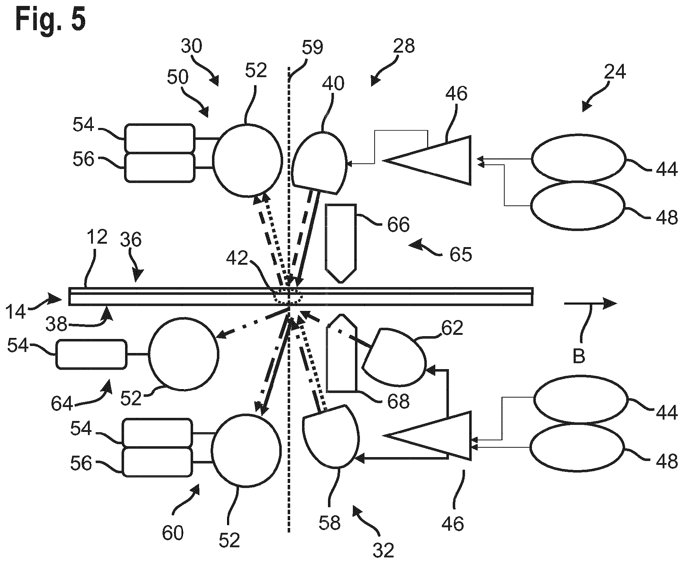

In Fig. 5 ist eine weitere Variante gezeigt, in der das der ersten Emissionseinheit 40 zugeordnete Schaltelement 46 mehrere Anschlussstellen und einzelne Ausgang aufweist, während das der zweiten Emissionseinheit 58 zugeordnete Schaltelement 46 mehrere Anschlussstellen und mehrere Ausgänge aufweist.

Der Messbereich 42 weist eine Länge von 30 mm oder weniger auf, wobei die Länge die Ausdehnung des Messbereichs 42 entlang der Richtung beschreibt, in die der Messbereich 42 am größten ist. In der in Fig. 2 gezeigten Variante ist dies die Ausdehnung parallel zur Bearbeitungsrichtung B.

Die erste Messeinheit 30 verfügt ferner über eine erste Detektoreinheit 50, die ein Sensorelement 52, ein VIS-Spektrometer 54 und ein NIR-Spektrometer 56 umfasst.

Das Sensorelement 52 ist dazu eingerichtet, auf das Sensorelement 52 auftreffende elektromagnetische Strahlung zu detektieren, wobei eine Intensitätsverteilung in Abhängigkeit der Wellenlänge der auftreffenden elektromagnetischen Strahlung bestimmbar ist. Auf Basis dieser Messdaten kann im VIS-Spektrometer 54 (für den sichtbaren Bereich des Lichtspektrums) bzw. im NIR-Spektrometer 56 (für den nahen Infrarotbereich des Lichtspektrums) eine Auswertung erfolgen, die Rückschlüsse auf die optischen Eigenschaften des beschichteten Substrats 14 erlauben.

Die zweite Messeinheit 32 verfügt - analog zur ersten Messeinheit 30 - über eine zweite Emissionseinheit 58, die dazu eingerichtet ist, gerichtete elektromagnetische Strahlung auf den gleichen Messbereich 42 des Substrats 14 zu emittieren, der auch von der ersten Messeinheit 30 bestrahlbar ist. Durch die zweite Emissionseinheit 58 erfolgt jedoch eine Bestrahlung des Messbereichs 42 von der zweiten Seite 38 des Substrats 14 her.

Die zweite Emissionseinheit 58 ist ebenfalls über ein Schaltelement 46 der zweiten Messeinheit 32 mit einer ersten Quelle 44 und einer zweiten Quelle 48 für elektromagnetische Strahlung verbunden.

Ebenso verfügt die zweite Emissionseinheit 58 über eine zweite Detektoreinheit 60, die ebenfalls ein Sensorelement 52, ein VIS-Spektrometer 54 und ein NIR-Spektrometer 56 analog zur ersten Detektoreinheit 50 umfasst.

Die erste Emissionseinheit 40 und die zweite Emissionseinheit 58 sind relativ zum beschichteten Substrat 14 derart ausgerichtet, dass die von der ersten Emissionseinheit 40 und der zweiten Emissionseinheit 58 abgegebene elektromagnetische Strahlung in einem ersten Emissionswinkel α₁ bzw. einem zweiten Emissionswinkel α₂ relativ zur Normalen 59 der ersten Seite 36 bzw. der zweiten Seite 38 des Substrats 14 auftrifft.

Der erste Emissionswinkel α₁ und der zweite Emissionswinkel α₂ sind erfindungsgemäß ungleich 0° und liegen insbesondere im Bereich von 3 bis 10°, betragen beispielsweise 8°.

Die zweite Messeinheit 32 verfügt weiter über eine dritte Emissionseinheit 62, die ebenfalls dazu eingerichtet ist, den gleichen Messbereich 42 mit elektromagnetischer Strahlung zu bestrahlen wie die erste Emissionseinheit 40 und die zweite Emissionseinheit 58. Dazu ist die dritte Emissionseinheit 62 ebenfalls mit der ersten Quelle 44 und der zweiten Quelle 48 wie die zweite Emissionseinheit 58 verbunden.

Wie in Fig. 2 zu erkennen ist, ist die dritte Emissionseinheit 62 nicht über das Schaltelement 46 der zweiten Messeinheit 32 an die erste Quelle 44 und die zweite Quelle 48 angeschlossen. Selbstredend kann die dritte Emissionseinheit 62 aber ebenfalls über ein analoges Schaltelement 46 verfügen.

Auch ist es möglich, dass das Schaltelement 46 wie zuvor beschrieben über mehrere Ausgänge verfügt, wobei einer der Ausgänge mit der dritten Emissionseinheit 62 verbunden ist. Eine solche weitere Ausführungsform ist in Fig. 5 dargestellt, wobei die weitere Ausführungsform im Übrigen der Ausführungsform nach Fig. 2 bis 4 entspricht, sodass die Ausführungen zu dieser Ausführungsform auch analog für die Ausführungsform nach Fig. 5 gelten.

Die zweite Messeinheit 32 weist ferner eine dritte Detektoreinheit 64 auf, die der dritten Emissionseinheit 62 zugeordnet ist und ein Sensorelement 52 sowie ein VIS-Spektrometer 54 umfasst.

Die von der dritten Emissionseinheit 62 abgegebene elektromagnetische Strahlung trifft in einem dritten Emissionswinkel α₃ relativ zur Normalen 59 auf die zweite Seite 38 des Substrats 14, wobei der dritte Emissionswinkel α₃ deutlich größer ist als der erste Emissionswinkel α₁ und der zweite Emissionswinkel α₂. Beispielsweise liegt der dritte Emissionswinkel α₃ im Bereich von 45 bis 65°.

Die Vorrichtung 24 umfasst ferner eine Einheit 65 zum Durchführen einer Messung eines Flächenwiderstands des beschichteten Substrats 14, nämlich eine Einheit zum Durchführen einer Wirbelstrommessung. Die Einheit 65 umfasst zwei Messsonden 66 und 68, wobei die Messsonde 66 der ersten Seite 36 des beschichteten Substrats 14 und die Messsonde 68 der zweiten Seite 38 des beschichteten Substrats 14 zugeordnet ist.

Die Einheit 65 ermöglicht eine Bestimmung von Eigenschaften des beschichteten Substrats 14 basierend auf der Induktion von Strömen im beschichteten Substrat 14 und bietet somit die Möglichkeit zur Eigenschaftsbestimmung des beschichteten Substrats 14 über eine Methode, die komplementär zu optischen Messverfahren ist.

Dabei untersucht die Einheit 65 den gleichen Messbereich 42, der auch von den Emissionseinheiten 40, 58 und 62 bestrahlt wurde, beispielsweise nachdem das Substrat 14 entlang der Bearbeitungsrichtung B bis zur Höhe der Messsonden 66 und 68 verfahren wurde.

Die mit den weiteren Messungen abgestimmte Ansteuerung der Einheit 65 kann über das Steuermodul 34 sichergestellt werden, das ebenfalls mit der Einheit 65 signalübertragend verbunden ist und dieses steuert.

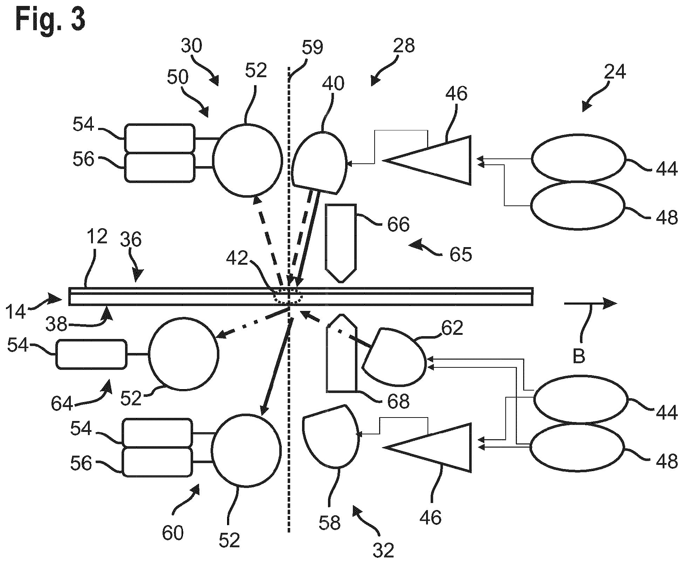

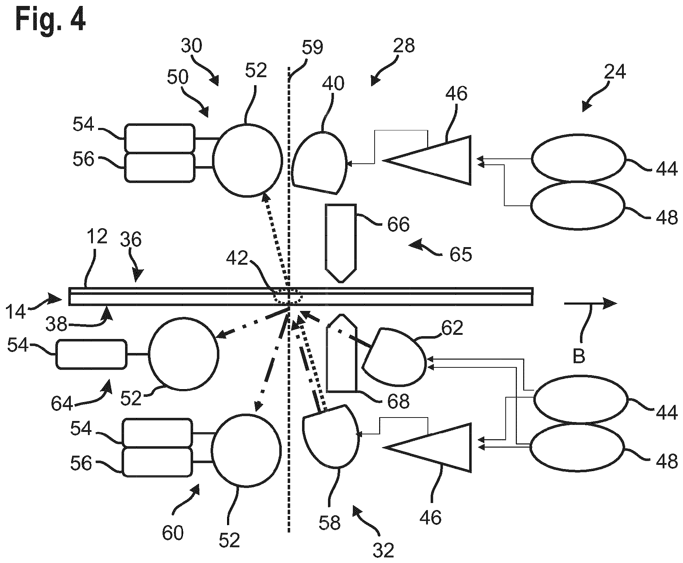

Im Folgenden wird die Funktionsweise der erfindungsgemäßen Vorrichtung 24 anhand der Fig. 3 und 4 weiter erläutert.

Erfindungsgemäß verfügt die Vorrichtung 24 über einen ersten Betriebsmodus (vgl. Fig. 3) und einen zweiten Betriebsmodus (vgl. Fig. 4). Der erste Betriebsmodus und der zweite Betriebsmodus unterscheiden sich darin, welche der Emissionseinheiten 40 und 58 aktiv sind.

Im ersten Betriebsmodus ist die erste Emissionseinheit 40 aktiv und die zweite Emissionseinheit 58 inaktiv (vgl. Fig. 3). Anders ausgedrückt ist im ersten Betriebsmodus die Verbindung zwischen erster Emissionseinheit 40 und den Quellen 44 und 48 der ersten Messeinheit 30 über das Schaltelement 46 der ersten Messeinheit 30 freigegeben, während die Verbindung zwischen zweiter Emissionseinheit 58 und den Quellen 44 und 48 der zweiten Messeinheit 30 über das Schaltelement 46 der zweiten Messeinheit 30 blockiert ist.

Daher wird im ersten Betriebsmodus der Messbereich 42 lediglich von der ersten Emissionseinheit 40 mit elektromagnetischer Strahlung bestrahlt. Die auf das beschichtete Substrat 14 auftreffende elektromagnetische Strahlung läuft teilweise durch das beschichtete Substrat 14 hindurch und wird teilweise vom beschichteten Substrat 14 reflektiert, nämlich von der Substratbeschichtung 12, sodass sich ein Transmissionsstrahlengang (in den Figuren über Pfeile angedeutet) und ein Reflexionsstrahlengang (in den Figuren über gestrichelte Pfeile angedeutet) ergibt.

Die elektromagnetische Strahlung des Transmissionsstrahlengangs trifft auf das Sensorelement 52 der zweiten Detektoreinheit 60, während die elektromagnetische Strahlung des Reflexionsstrahlengangs auf das Sensorelement 52 der ersten Detektoreinheit 50 trifft. Somit werden erfindungsgemäß im ersten Betriebsmodus gleichzeitig die Transmissions- und Reflexionseigenschaften des beschichteten Substrats 14 bei Bestrahlung von der ersten Seite 36 her untersucht.

Im zweiten Betriebsmodus ist die zweite Emissionseinheit 58 aktiv und die erste Emissionseinheit 40 inaktiv (vgl. Fig. 4). Anders ausgedrückt ist im zweiten Betriebsmodus die Verbindung zwischen zweiter Emissionseinheit 58 und den Quellen 44 und 48 der zweiten Messeinheit 32 über das Schaltelement 46 der zweiten Messeinheit 32 freigegeben, während die Verbindung zwischen erster Emissionseinheit 40 und den Quellen 44 und 48 der ersten Messeinheit 30 über das Schaltelement 46 der ersten Messeinheit 30 blockiert ist.

Daher wird im zweiten Betriebsmodus der Messbereich 42 von der zweiten Emissionseinheit 58 mit elektromagnetischer Strahlung bestrahlt. Die auf das beschichtete Substrat 14 auftreffende elektromagnetische Strahlung läuft teilweise durch das beschichtete Substrat 14 hindurch und wird teilweise vom beschichteten Substrat 14 reflektiert, sodass sich wiederum ein Transmissionsstrahlengang (in den Figuren über punktierte Pfeile angedeutet) und ein Reflexionsstrahlengang (in den Figuren über gestrichelt-punktierte Pfeile angedeutet) ergibt.

Die elektromagnetische Strahlung des Transmissionsstrahlengangs trifft auf das Sensorelement 52 der ersten Detektoreinheit 50, während die elektromagnetische Strahlung des Reflexionsstrahlengangs auf das Sensorelement 52 der zweiten Detektoreinheit 60 trifft. Somit werden erfindungsgemäß im zweiten Betriebsmodus gleichzeitig die Transmissions- und Reflexionseigenschaften des beschichteten Substrats 14 bei Bestrahlung von der zweiten Seite 38 her untersucht.

Zusätzlich ist in der gezeigten Ausführungsform sowohl im ersten Betriebsmodus als auch im zweiten Betriebsmodus die dritte Emissionseinheit 62 aktiv, sodass der Messbereich 42 zusätzlich von der dritten Emissionseinheit 62 mit elektromagnetischer Strahlung bestrahlt wird. Diese wird von der zweiten Seite 38 des Substrats 14 reflektiert und trifft auf das Sensorelement 52 der dritten Detektionseinheit 64 (in den Figuren über gestrichelt-doppelt-punktierte Pfeile verdeutlicht). Über die dritte Detektionseinheit 64 ist der Farbeindruck bestimmbar, den ein Betrachter des Substrats 14 erhält, wenn dieser in einem Betrachtungswinkel auf die zweite Seite 38 des Substrats blickt, der dem dritten Emissionswinkel entspricht.

Grundsätzlich ist es auch möglich, dass die dritte Emissionseinheit 62 nur im ersten Betriebsmodus oder nur im zweiten Betriebsmodus aktiv ist. Dazu kann der dritten Emissionseinheit 62 wie zuvor beschrieben ein eigenes Schaltelement 46 zugeordnet sein, sodass die Quellen 44 und 48 selbst weiterhin nicht an- und abgeschaltet werden müssen.

Zudem ist es möglich, mittels der dritten Detektoreinheit 64 etwaige Streulichtanteile zu bestimmen, die im zweiten Betriebsmodus beim Betrieb der zweiten Emissionseinheit 58 auftreten, insbesondere sofern die dritte Emissionseinheit 62 im zweiten Betriebsmodus nicht betrieben wird. Auf diese Weise können Streulichtanteile bei der Auswertung der Messungen im zweiten Betriebsmodus berücksichtig werden. Entsprechendes gilt auch für den ersten Betriebsmodus, falls der ersten Seite 36 beschichteten Substrats 14 eine dritte Detektoreinheit 64 zugeordnet ist.

Der Wechsel zwischen dem ersten Betriebsmodus und dem zweiten Betriebsmodus kann sehr schnell erfolgen und wird lediglich über die Schaltzeit der Schaltelemente 46 begrenzt. Zudem zeichnet sich die erfindungsgemäße Vorrichtung 24 dadurch aus, dass die Gesamtmesszeit zum Bestimmen optischer Eigenschaften des Substrats 14 stark reduziert ist, da durch die simultane Bestimmung von Transmissions- und Reflexionseigenschaften des beschichteten Substrats 14 (im ersten Betriebsmodus von der ersten Seite 36 her und im zweiten Betriebsmodus von der zweiten Seite 38 her) die Anzahl durchzuführender Einzelmessung minimiert ist. Auf diese Weise ist zudem ein vergleichsweise kleiner Messbereich 42 erzielbar, in dem alle Messungen durchgeführt werden, sodass die optischen Eigenschaften des beschichteten Substrats 14 mit einer hohen lokalen Auflösung bestimmt werden können.

Der Messkopf 28 als Ganzes, die erste Messeinheit 30, die zweite Messeinheit 32 und/oder die Einheit 65 zum Durchführen einer Messung eines Flächenwiderstands des Substrats 14 sind bevorzugt beweglich entlang des Substrats 14. Auf diese Weise können einerseits unterschiedliche Bereiche des Substrats 14 untersucht werden und andererseits die Bewegungen des Substrats 14 entlang der Bearbeitungsrichtung B ausgeglichen werden, um die Größe des Messbereichs 42 zu minimieren bzw. sicherzustellen, dass der gleiche Messbereich 42 in den verschiedenen Betriebsmodi sowie von der Einheit 65 untersucht wird. Insbesondere kann auch eine Mehrfachmessung realisiert werden.

Insgesamt zeichnet sich die erfindungsgemäße Vorrichtung 24 durch eine hohe Flexibilität bei der Bestimmung optischer Eigenschaften des beschichteten Substrats 14 aus sowie durch die Möglichkeit, besonders kleine Messbereiche zu realisieren.

### Bezugszeichenliste

- 10: Beschichtungsanlage
- 12: Substratbeschichtung
- 14: Substrat
- 16: Beladungsmodul
- 18: Beschichtungsmodul

- 20: Waschmodul
- 22: Entlademodul
- 23: Rollenanordnung
- 24: Vorrichtung zum Bestimmen optischer Eigenschaften
- 26: Transporteinrichtung
- 28: Messkopf

- 30: erste Messeinheit
- 32: zweite Messeinheit
- 34: Steuermodul
- 36: erste Seite des Substrats
- 38: zweite Seite des Substrats

- 40: erste Emissionseinheit
- 42: Messbereich
- 44: erste Quelle
- 46: Schaltelement
- 48: zweite Quelle
- 50: erste Detektoreinheit
- 52: Sensorelement
- 54: VIS-Spektrometer
- 56: NIR-Spektrometer
- 58: zweite Emissionseinheit
- 59: Normale

- 60: zweite Detektoreinheit
- 62: dritte Emissionseinheit
- 64: dritte Detektoreinheit
- 65: Einheit zum Durchführen einer Messung des Flächenwiderstands
- 66: Messsonde
- 68: Messsonde

## Patentansprüche

1. Vorrichtung (24) zum Bestimmen optischer Eigenschaften eines optisch transparenten Substrats (14), das auf einer ersten Seite (36) mit einer Substratbeschichtung (12) versehen ist,
wobei die Vorrichtung (24) eine erste Messeinheit (30) und eine zweite Messeinheit (32) umfasst, wobei die erste Messeinheit (30) der ersten Seite (36) des Substrats (14) und die zweite Messeinheit (32) einer zweiten Seite (38) des Substrats (14) zugeordnet ist, die zur ersten Seite (36) entgegengesetzt ist,
wobei die erste Messeinheit (30) eine erste Emissionseinheit (40) zum Bestrahlen eines Messbereichs (42) des Substrats (14) mit gerichteter elektromagnetischer Strahlung frei von Streulichtanteilen sowie eine erste Detektoreinheit (50) umfasst,
wobei die zweite Messeinheit (32) zumindest eine zweite Emissionseinheit (58) zum Bestrahlen des Messbereichs (42) des Substrats (14) mit gerichteter elektromagnetischer Strahlung frei von Streulichtanteilen sowie zumindest eine zweite Detektoreinheit (60) umfasst,
wobei die Vorrichtung (24) einen ersten Betriebsmodus und einen zweiten Betriebsmodus aufweist, wobei im ersten Betriebsmodus die erste Emissionseinheit (40) aktiv und die zweite Emissionseinheit (58) inaktiv ist und im zweiten Betriebsmodus die erste Emissionseinheit (40) inaktiv und die zweite Emissionseinheit (58) aktiv ist, sodass
im ersten Betriebsmodus die von der Substratbeschichtung (12) im Messbereich (42) reflektierte elektromagnetische Strahlung in der ersten Detektoreinheit (50) sowie die vom Substrat (14) im Messbereich (42) transmittierte elektromagnetische Strahlung in der zweiten Detektoreinheit (60) detektierbar ist und
im zweiten Betriebsmodus die vom Substrat (14) im Messbereich (42) reflektierte elektromagnetische Strahlung in der zweiten Detektoreinheit (60) detektierbar ist.

2. Vorrichtung (24) nach Anspruch 1, wobei die erste Emissionseinheit (40) und/oder die zweite Emissionseinheit (58) derart zur ersten Seite (36) bzw. zur zweiten Seite (38) des Substrats (14) angeordnet sind bzw. ist, dass die abgegebene elektromagnetische Strahlung einen ersten bzw. zweiten Emissionswinkel im Bereich von 3 bis 10 ° relativ zur Normalen (59) der ersten Seite (36) bzw. der zweiten Seite (38) des Substrats (14) hat.

3. Vorrichtung (24) nach Anspruch 1 oder 2, wobei das Substrat (14), die erste Emissionseinheit (40), die zweite Emissionseinheit (58), die erste Detektoreinheit (50) und die zweite Detektoreinheit (60) derart zueinander angeordnet sind, dass sich eine von der ersten Emissionseinheit (40) in Richtung zur zweiten Detektoreinheit (60) erstreckende erste Verbindungslinie mit einer zweiten Verbindungslinie im Messbereich (42) des Substrats (14) schneidet, die sich von der zweiten Emissionseinheit (58) in Richtung zur ersten Detektoreinheit (50) erstreckt.

4. Vorrichtung (24) nach einem der vorhergehenden Ansprüche, wobei die erste Detektoreinheit (50) und/oder die zweite Detektoreinheit (60) ein VIS-Spektrometer (54) und/oder ein NIR-Spektrometer (56) umfasst.

5. Vorrichtung (24) nach einem der vorhergehenden Ansprüche, wobei der ersten Emissionseinheit (40) und/oder der zweiten Emissionseinheit (58) ein Schaltelement (46) zugeordnet ist, mittels dem eine Quelle (44, 48) für elektromagnetische Strahlung zuschaltbar ist, um die erste Emissionseinheit (40) oder die zweite Emissionseinheit (58) aktiv zu schalten, insbesondere wobei das Schaltelement (46) in der entsprechenden Emissionseinheit (40, 58) integriert ist.

6. Vorrichtung (24) nach Anspruch 5, wobei das Schaltelement (46) eine Schaltzeit von 30 ms oder weniger aufweist.

7. Vorrichtung (24) nach einem der vorhergehenden Ansprüche, wobei der Messbereich (42) eine Länge von 30 mm oder weniger aufweist.

8. Vorrichtung (24) nach einem der vorhergehenden Ansprüche, wobei die erste Messeinheit (30) und/oder die zweite Messeinheit (32) eine dritte Emissionseinheit (62) zum Bestrahlen des Messbereichs (42) des Substrats (14) mit gerichteter elektromagnetischer Strahlung sowie eine der dritten Emissionseinheit (14) zugeordnete dritte Detektoreinheit (64) hat, wobei die dritte Emissionseinheit (14) derart zur ersten Seite (36) bzw. zur zweiten Seite (38) des Substrats (14) angeordnet ist, dass die abgegebene elektromagnetische Strahlung einen dritten Emissionswinkel relativ zur Normalen (59) der ersten Seite (36) bzw. der zweiten Seite (38) des Substrats (14) hat, insbesondere wobei der dritte Emissionswinkel im Bereich von 45 bis 65° liegt.

9. Vorrichtung (24) nach Anspruch 8, wobei der dritte Emissionswinkel stufenweise oder stufenlos verstellbar ist.

10. Vorrichtung (24) nach einem der vorhergehenden Ansprüche, wobei die elektromagnetische Strahlung eine Wellenlänge im Bereich von 350 bis 2500 nm aufweist.

11. Vorrichtung (24) nach einem der vorhergehenden Ansprüche, wobei wenigstens ein Messkopf (28) vorgesehen ist, der die erste Messeinheit (30) und/oder die zweite Messeinheit (32) aufweist, und wobei der Messkopf (28) entlang des Substrats (14) beweglich ist.

12. Vorrichtung (24) nach einem der vorhergehenden Ansprüche, wobei die Vorrichtung (24) über eine Transporteinrichtung (26) verfügt, mit der das Substrat (14) entlang einer Bearbeitungsrichtung verfahrbar ist.

13. Vorrichtung (24) nach Anspruch 12, sofern auf Anspruch 11 zurückbezogen, wobei die Vorrichtung (24) dazu eingerichtet ist, die optischen Eigenschaften des Substrats (14) in mehreren Messbereichen (42) zu ermitteln, wobei für jeden der Messbereiche (42) zumindest eine Messung im ersten Betriebsmodus der Vorrichtung (24) und eine Messung im zweiten Betriebsmodus der Vorrichtung (24) durchgeführt wird.

14. Vorrichtung (24) nach einem der vorhergehenden Ansprüche, wobei die Vorrichtung (24) eine Einheit (65) zum Durchführen einer Messung eines Flächenwiderstands des Substrats (14) aufweist, insbesondere zum Durchführen einer Wirbelstrommessung im Messbereich (42) des Substrats (14).

15. Beschichtungsanlage (10) zum Herstellen eines optisch transparenten Substrats (14) mit einer auf einer ersten Seite (36) des Substrats (14) aufgebrachten Substratbeschichtung (12), umfassend eine Vorrichtung (24) zum Bestimmen optischer Eigenschaften des optisch transparenten Substrats (14) nach einem der vorhergehenden Ansprüche.

## Claims

1. A device (24) for determining optical properties of an optically transparent substrate (14) which is provided with a substrate coating (12) on a first side (36),
wherein the device (24) comprises a first measuring unit (30) and a second measuring unit (32), the first measuring unit (30) being assigned to the first side (36) of the substrate (14) and the second measuring unit (32) being assigned to a second side (38) of the substrate (14) opposite to the first side (36),
wherein the first measuring unit (30) comprises a first emission unit (40) for irradiating a measuring area (42) of the substrate (14) with directed electromagnetic radiation free of scattered light components and a first detector unit (50),
wherein the second measuring unit (32) comprises at least a second emission unit (58) for irradiating the measuring area (42) of the substrate (14) with directed electromagnetic radiation free of scattered light components and at least a second detector unit (60),
wherein the device (24) has a first operating mode and a second operating mode, wherein, in the first operating mode, the first emission unit (40) is active and the second emission unit (58) is inactive and, in the second operating mode, the first emission unit (40) is inactive and the second emission unit (58) is active, so that
in the first operating mode, the electromagnetic radiation reflected by the substrate coating (12) in the measuring area (42) can be detected in the first detector unit (50) and the electromagnetic radiation transmitted by the substrate (14) in the measuring area (42) can be detected in the second detector unit (60), and
in the second operating mode, the electromagnetic radiation reflected by the substrate (14) in the measuring area (42) can be detected in the second detector unit (60).

2. The device (24) according to claim 1, wherein at least one of the first emission unit (40) and the second emission unit (58) is arranged in relation to the first side (36) and, respectively, to the second side (38) of the substrate (14) such that the electromagnetic radiation emitted has a first and, respectively, a second emission angle in the range of 3 to 10° relative to the normal (59) of the first side (36) and, respectively, the second side (38) of the substrate (14).

3. The device (24) according to claim 1 or 2, wherein the substrate (14), the first emission unit (40), the second emission unit (58), the first detector unit (50) and the second detector unit (60) are arranged in relation to each other such that a first connecting line extending from the first emission unit (40) toward the second detector unit (60) intersects a second connecting line in the measuring area (42) of the substrate (14) extending from the second emission unit (58) toward the first detector unit (50).

4. The device (24) according to any one of the preceding claims, wherein at least one of the first detector unit (50) and the second detector unit (60) comprises at least one of a VIS spectrometer (54) and a NIR spectrometer (56).

5. The device (24) according to any one of the preceding claims, wherein at least one of the first emission unit (40) and the second emission unit (58) is assigned a switching element (46) by means of which a source (44, 48) of electromagnetic radiation can be connected in order to actively switch one of the first emission unit (40) and the second emission unit (58), in particular wherein the switching element (46) is integrated in the respective emission unit (40, 58).

6. The device (24) according to claim 5, wherein the switching element (46) has a switching time of 30 ms or less.

7. The device (24) according to any one of the preceding claims, wherein the measuring area (42) has a length of 30 mm or less.

8. The device (24) according to any one of the preceding claims, wherein at least one of the first measuring unit (30) and the second measuring unit (32) has a third emission unit (62) for irradiating the measuring area (42) of the substrate (14) with directed electromagnetic radiation and a third detector unit (64) assigned to the third emission unit (14), wherein the third emission unit (14) is arranged in relation to at least one of the first side (36) and the second side (38) of the substrate (14) such that the electromagnetic radiation emitted has a third emission angle relative to the normal (59) of the first side (36) and, respectively, the second side (38) of the substrate (14), in particular wherein the third emission angle is in the range of 45 to 65°.

9. The device (24) according to claim 8, wherein the third emission angle is adjustable in steps or continuously.

10. The device (24) according to any one of the preceding claims, wherein the electromagnetic radiation has a wavelength in the range from 350 to 2500 nm.

11. The device (24) according to any one of the preceding claims, wherein at least one measuring head (28) is provided which includes at least one of the first measuring unit (30) and the second measuring unit (32), and wherein the measuring head (28) is movable along the substrate (14).

12. The device (24) according to any one of the preceding claims, wherein the device (24) has a transport device (26) by means of which the substrate (14) can be moved along a processing direction.

13. The device (24) according to claim 12 if dependent on claim 11, wherein the device (24) is configured to determine the optical properties of the substrate (14) in a plurality of measuring areas (42), wherein for each of the measuring areas (42) at least one measurement is performed in the first operating mode of the device (24) and one measurement is performed in the second operating mode of the device (24).

14. The device (24) according to any one of the preceding claims, wherein the device (24) includes a unit (65) for performing a measurement of a sheet resistance of the substrate (14), in particular for performing an eddy current measurement in the measuring area (42) of the substrate (14).

15. A coating system (10) for manufacturing an optically transparent substrate (14) having a substrate coating (12) applied to a first side (36) of the substrate (14), comprising a device (24) for determining optical properties of the optically transparent substrate (14) according to any of the preceding claims.

## Revendications

1. Dispositif (24) de détermination de propriétés optiques d'un substrat optiquement transparent (14) qui est pourvu d'un revêtement de substrat (12) sur un premier côté (36),
le dispositif (24) comprenant une première unité de mesure (30) et une deuxième unité de mesure (32), la première unité de mesure (30) étant associée au premier côté (36) du substrat (14) et la deuxième unité de mesure (32) étant associée à un deuxième côté (38) du substrat (14) qui est opposé au premier côté (36),
la première unité de mesure (30) comprenant une première unité d'émission (40) pour irradier une zone de mesure (42) du substrat (14) avec un rayonnement électromagnétique dirigé exempt de composantes de lumière diffuse, ainsi qu'une première unité de détection (50),
la deuxième unité de mesure (32) comprenant au moins une deuxième unité d'émission (58) pour irradier la zone de mesure (42) du substrat (14) avec un rayonnement électromagnétique dirigé exempt de composantes de lumière diffuse, et au moins une deuxième unité de détection (60),
le dispositif (24) présentant un premier mode de fonctionnement et un deuxième mode de fonctionnement, la première unité d'émission (40) étant active et la deuxième unité d'émission (58) étant inactive dans le premier mode de fonctionnement, et la première unité d'émission (40) étant inactive et la deuxième unité d'émission (58) étant active dans le deuxième mode de fonctionnement, de sorte que
dans le premier mode de fonctionnement, le rayonnement électromagnétique réfléchi par le revêtement de substrat (12) dans la zone de mesure (42) est détectable dans la première unité de détection (50) et le rayonnement électromagnétique transmis par le substrat (14) dans la zone de mesure (42) est détectable dans la deuxième unité de détection (60), et
dans le deuxième mode de fonctionnement, le rayonnement électromagnétique réfléchi par le substrat (14) dans la zone de mesure (42) est détectable dans la deuxième unité de détection (60).

2. Dispositif (24) selon la revendication 1, la première unité d'émission (40) et/ou la deuxième unité d'émission (58) étant agencé(es) de telle sorte par rapport au premier côté (36) et au deuxième côté (38) du substrat (14), respectivement, que le rayonnement électromagnétique émis présente un premier et un deuxième angle d'émission, respectivement, compris dans la plage de 3 à 10° par rapport à la normale (59) du premier côté (36) et du deuxième côté (38) du substrat (14), respectivement.

3. Dispositif (24) selon la revendication 1 ou 2, le substrat (14), la première unité d'émission (40), la deuxième unité d'émission (58), la première unité de détection (50) et la deuxième unité de détection (60) étant agencés les uns par rapport aux autres de telle sorte qu'une première ligne de raccordement s'étendant depuis la première unité d'émission (40) en direction de la deuxième unité de détection (60) croise une deuxième ligne de raccordement dans la zone de mesure (42) du substrat (14), qui s'étend de la deuxième unité d'émission (58) en direction de la première unité de détection (50).

4. Dispositif (24) selon l'une des revendications précédentes, la première unité de détection (50) et/ou la deuxième unité de détection (60) comprenant un spectromètre VIS (54) et/ou un spectromètre NIR (56).

5. Dispositif (24) selon l'une des revendications précédentes, un élément de commutation (46) étant associé à la première unité d'émission (40) et/ou à la deuxième unité d'émission (58), au moyen duquel une source (44, 48) de rayonnement électromagnétique peut être raccordée pour commuter la première unité d'émission (40) ou la deuxième unité d'émission (58) à l'état actif, l'élément de commutation (46) étant notamment intégré dans l'unité d'émission correspondante (40, 58).

6. Dispositif (24) selon la revendication 5, l'élément de commutation (46) présentant un temps de commutation de 30 ms ou moins.

7. Dispositif (24) selon l'une des revendications précédentes, la zone de mesure (42) présentant une longueur de 30 mm ou moins.

8. Dispositif (24) selon l'une des revendications précédentes, la première unité de mesure (30) et/ou la deuxième unité de mesure (32) présentant une troisième unité d'émission (62) pour irradier la zone de mesure (42) du substrat (14) avec un rayonnement électromagnétique dirigé, ainsi qu'une troisième unité de détection (64) associée à la troisième unité d'émission (14), la troisième unité d'émission (14) étant agencée de telle sorte par rapport au premier côté (36) ou au deuxième côté (38) du substrat (14) que le rayonnement électromagnétique émis présente un troisième angle d'émission par rapport à la normale (59) du premier côté (36) ou du deuxième côté (38) du substrat (14), le troisième angle d'émission étant notamment compris dans la plage de 45 à 65°.

9. Dispositif (24) selon la revendication 8, le troisième angle d'émission étant réglable par paliers ou en continu.

10. Dispositif (24) selon l'une des revendications précédentes, le rayonnement électromagnétique présentant une longueur d'onde dans la plage de 350 à 2500 nm.

11. Dispositif (24) selon l'une des revendications précédentes, au moins une tête de mesure (28) étant prévue, laquelle comprend la première unité de mesure (30) et/ou la deuxième unité de mesure (32), et la tête de mesure (28) étant mobile le long du substrat (14).

12. Dispositif (24) selon l'une des revendications précédentes, le dispositif (24) comportant un dispositif de transport (26) au moyen duquel le substrat (14) est déplaçable le long d'un sens d'usinage.

13. Dispositif (24) selon la revendication 12, dans la mesure où elle dépend de la revendication 11, le dispositif (24) étant aménagé de manière à déterminer les propriétés optiques du substrat (14) dans plusieurs zones de mesure (42), au moins une mesure dans le premier mode de fonctionnement du dispositif (24) et une mesure dans le deuxième mode de fonctionnement du dispositif (24) étant réalisées pour chacune des zones de mesure (42).

14. Dispositif (24) selon l'une des revendications précédentes, le dispositif (24) présentant une unité (65) pour la réalisation d'une mesure d'une résistance superficielle du substrat (14), en particulier pour la réalisation d'une mesure par courants de Foucault dans la zone de mesure (42) du substrat (14).

15. Installation de revêtement (10) pour la fabrication d'un substrat optiquement transparent (14) avec un revêtement de substrat (12) appliqué d'un premier côté (36) du substrat (14), comprenant un dispositif (24) de détermination de propriétés optiques du substrat optiquement transparent (14) selon l'une des revendications précédentes.
